# EUROPÄISCHE PATENTSCHRIFT

(11) **EP 3 468 852 B1**
(45) Veröffentlichungstag und Bekanntmachung des Hinweises auf die Patenterteilung: **22.06.2022**
(21) Anmeldenummer: 17771731.1
(22) Anmeldetag: 19.09.2017
(51) Int. Cl.: B60W 50/00

(54) **VERFAHREN ZUM BETREIBEN EINES KRAFTFAHRZEUGS MIT HILFE VON PHYSIOLOGISCHEN VITALDATEN, KRAFTFAHRZEUG UND MOBILES ENDGERÄT**
METHOD FOR OPERATING A MOTOR VEHICLE WITH THE HELP OF PHYSIOLOGICAL VITAL DATA, MOTOR VEHICLE AND MOBILE TERMINAL DEVICE
PROCÉDÉ PERMETTANT DE FAIRE FONCTIONNER UN VÉHICULE AUTOMOBILE À L'AIDE DE DONNÉES VITALES PHYSIOLOGIQUES, VÉHICULE AUTOMOBILE ET TERMINAL MOBILE

(30) Priorität: 29.09.2016 DE 102016218877
(43) Veröffentlichungstag der Anmeldung: 17.04.2019
(73) Patentinhaber: Audi AG, 85045 Ingolstadt (DE)
(72) Erfinder: SCHÖN, Torsten, 85111 Pietenfeld (DE)
(86) Internationale Anmeldenummer: PCT/EP2017/073529
(87) Internationale Veröffentlichungsnummer: WO 2018/059995

(56) Entgegenhaltungen:
- DE-A1-102011 109 564
- DE-B3-102014 019 158
- GB-A- 2 528 083

## Beschreibung

Die Erfindung betrifft ein Verfahren zum Betreiben eines Kraftfahrzeugs. Eine Sensoreinrichtung zum Empfangen von physiologischen Vitaldaten eines Benutzers empfängt die physiologischen Vitaldaten, beispielsweise einen Puls oder eine Herzrate, anhand derer ein Indexwert ermittelt wird, der einen physiologischen Parameter beschreibt. In Abhängigkeit von dem Indexwert kann dann ein Aktor des Kraftfahrzeugs gesteuert werden.

Mit der Entwicklung von sogenannten "Wearables", also tragbaren Accessoires, die solche physiologischen Vitaldaten erfassen können, wird deren Einsatz auch verstärkt im Kraftfahrzeug vorgenommen. Ein solches "Wearable" weist hierzu eine Sensoreinrichtung auf, die beispielsweise einen Pulssensor oder einen Atemsensor haben kann.

Die DE 10 2015 105 581 A1 beschreibt ein Verfahren zum Überwachen eines Gesundheitszustandes eines Fahrzeugsinsassen. Physiologische Parameter können dazu genutzt werden, einen Gesundheitszustand oder einen Befindenszustand oder ein krankhaftes Ereignis abzuleiten. Über einen Bildschirm des Kraftfahrzeugs kann der Benutzer über seinen Gesundheitszustand informiert werden.

Aus der EP 2711 226 A1 ist ein Verfahren mit einem entsprechenden System bekannt, mit dem physiologische Eigenschaften eines Fahrers gemessen und eine Kupplungssteuerung angepasst werden kann.

Die DE 10 2011 112 371 A1 beschreibt eine Vorrichtung zum Einstellen wenigstens eines Betriebsparameters eines Kraftfahrzeugsystems, um einen Fahrer zu entspannen.

Die GB 2 528 083 A beschreibt ein automatisiertes Vorrichtungssteuersystem zur Verwendung in einem Fahrzeug, wobei das Vorrichtungssteuersystem ein Benutzeridentifizierungsmodul, das einen Fahrzeugbenutzer identifiziert, und ein Überwachungsmodul, das einen Wert eines Parameters erhält, der den Benutzergefühlzustand anzeigt, zum Beispiel eine Wachheit oder Müdigkeit, umfasst.

Nachteilig ist bei den Verfahren aus dem Stand der Technik jedoch, dass der Benutzer selbst keine Einfluss darauf hat, welche Maßnahmen zum Verbessern des physiologischen Zustand er gerne hätte.

Eine der Erfindung zugrundeliegende Aufgabe ist das Bereitstellen einer benutzerspezifischen Maßnahme zum Verbessern eines physiologischen Zustandes des Benutzers.

Die gestellte Aufgabe wird durch das Verfahren nach Anspruch 1 und die Vorrichtungen der nebengeordneten Patentansprüche gelöst. Vorteilhafte Weiterbildungen der Erfindung sind durch die Unteransprüche gegeben.

Die Erfindung basiert auf der Idee, zu zumindest zwei unterschiedlichen Zeitpunkten einen Indexwert aus physiologischen Vitaldaten des Benutzers zu ermitteln, wobei jeder Indexwert einen physiologischen Zustand des Benutzers beschreibt. Es wird ermittelt, ob ein Aktor des Kraftfahrzeugs, der zum Verbessern eines ersten physiologischen Zustandes des Benutzers aktiviert wird, den physiologischen Zustand effektiv verbessert. Das Kraftfahrzeug kann somit "lernen", ob eine Funktion des Aktors, im Folgenden als Aktorfunktion bezeichnet, dem Benutzer hilft oder nicht. Somit wird eine bessere Wirksamkeit der Stressreduzierung und damit auch eine bessere Kundenzufriedenheit erreicht.

Das erfindungsgemäße Verfahren zum Betreiben eines Kraftfahrzeugs weist den Verfahrensschritt des Ermittelns eines ersten Indexwerts aus zu einem ersten Zeitpunkt erfassten Vitaldaten auf, wobei die Vitaldaten aus einer Sensoreinrichtung empfangen werden, und wobei die Vitaldaten einen physiologischen Parameter eines Benutzers des Kraftfahrzeugs beschreiben, beispielsweise einen Puls oder eine Atemfrequenz. Ein Indexwert ist dabei ein Wert, der einen physiologischen Zustand des Benutzers beschreibt, beispielsweise einen Stresszustand oder einen Erschöpfungszustand.

Als Sensoreinrichtung wird ein Gerät oder eine Gerätekomponente verstanden, die zum Empfangen von chemischen, physikalischen oder anderen Eigenschaften einer Umwelt eingerichtet ist und hierzu mindestens einen Sensor aufweist. Im vorliegenden Fall ist die Sensoreinrichtung zum Empfangen der physiologischen Vitaldaten des Benutzers eingerichtet und kann beispielsweise einen Pulssensor oder einen Sensor einer elektrischen Leitfähigkeit aufweisen. Die Sensoreinrichtung kann dabei beispielsweise ein Bauteil des Kraftfahrzeugs oder in ein tragbares Accessoires integriert sein, also in ein sogenanntes "Wearable". Der physiologische Parameter ist dann beispielsweise ein Puls, ein Herzschlag oder eine Atemfrequenz.

In Abhängigkeit von dem ersten Indexwert erfolgt ein Auswählen eines ersten Aktors des Kraftfahrzeugs aus einer Mehrzahl von Aktoren. Die Steuereinrichtung wird als Gerät oder Gerätekomponente verstanden, die zur Signalübertragung und zum Erzeugen von Steuersignalen eingerichtet ist und hierzu beispielsweise einen Mikrokontroller und/oder einen Mikroprozessor aufweisen kann. Beispielsweise kann die Steuereinrichtung als Steuergerät des Kraftfahrzeugs ausgestaltet sein, das entsprechende Aktivierungssignal an den jeweiligen Aktor des Kraftfahrzeugs senden kann.

Durch die Steuereinrichtung erfolgt ein Erzeugen eines ersten Aktorsignals, das ein Aktivieren von einer von dem ersten Aktor durchzuführenden ersten Aktorfunktion beschreibt, und es erfolgt ebenfalls ein Übertragen des ersten Aktorsignals an den ersten Aktor. Beispielsweise kann die Steuereinrichtung ein Aktivierungssignal erzeugen, das beispielsweise eine Massagefunktion eines Kraftfahrzeugsitzes aktivieren kann.

Das erfindungsgemäße Verfahren ist dadurch gekennzeichnet, dass zu einem zweiten Zeitpunkt, mit anderen Worten zu einem Zeitpunkt nach dem Aktivieren der ersten Aktorfunktion, durch die Sensoreinrichtung erneut physiologische Vitaldaten erfasst werden und die Steuereinrichtung anhand dieser Vitaldaten einen zweiten Indexwert ermittelt. Es erfolgt ein Vergleichen der beiden Indexwerte, wobei jeder den physiologischen Zustand des Benutzers zu einem anderen Zeitpunkt beschreibt.

Anhand eines Ergebnisses des Vergleichs erfolgt ein Ermitteln, ob der zweite Indexwert ein Effektivitätskriterium erfüllt, das einen vorbestimmten Grad einer Verbesserung des physiologischen Zustands durch die aktivierte Aktorfunktion beschreibt. Das Effektivitätskriterium kann dabei beispielsweise ein in der Steuereinrichtung abgespeicherter Schwellenwert sein und/oder das Effektivitätskriterium kann beispielsweise vorschreiben, dass ein Stresszustand um einen vorbestimmten Grad reduziert werden soll, damit eine physiologische Verbesserung des Zustands eintritt. Falls der zweite Indexwert das Effektivitätskriterium erfüllt, erfolgt ein Aktivieren der ersten Aktorfunktion, sobald zu einem weiteren Zeitpunkt ein Indexwert ermittelt wird, der den physiologischen Zustand beschreibt. Mit anderen Worten wird die erste Aktorfunktion aktiviert, sobald sich der Benutzer zu einem späteren Zeitpunkt wieder in dem Kraftfahrzeug und in einem Stresszustand befindet.

Hierdurch ergibt sich eine besondere Wirksamkeit der Stressreduzierung und damit auch eine bessere Kundenzufriedenheit. Da der physiologische Zustand verbessert werden kann und das Wohlbefinden des Benutzers positiv beeinflussen können, führt das erfindungsgemäße Verfahren auch zu einer erhöhten Fahrsicherheit.

Optional kann die Steuereinrichtung aus den empfangenen Indexwerten und/oder dem Ergebnis des Vergleichs ein "Machine Learning Modell" bereitgestellt werden, das die Indexwerte und eine Effizienz der ersten Aktorfunktion oder mehrerer Aktorfunktionen beschreiben kann. Anhand eines solchen Modells kann dann zum Beispiel bei Vorliegen eines physiologischen Zustands abgelesen werden, welche Aktorfunktion für den Benutzer die effizienteste ist. Mit anderen Worten kann ein solches "Machine Learning Modell" individuelle Vorlieben des Benutzers bezüglich der verfügbaren Aktorfunktionen des Kraftfahrzeugs "erlernen". In Situationen, in denen sich der Benutzer erneut in dem physiologischen Zustand befindet, kann durch das beispielhafte Modell diejenige Maßnahme, die sich zuvor als besonders effizient erwiesen hat, zum Verbessern des physiologischen Zustands als bevorzugte Maßnahme aktiviert werden. Mit Hilfe des erfindungsgemäßen Verfahrens kann das Kraftfahrzeug also in vorteilhafter Weise "lernen", welche individuellen Bedürfnisse der Benutzer hat.

Hierzu kann gemäß einer weiteren Ausführungsform des erfindungsgemäßen Verfahrens, falls der zweite Indexwert das Effektivitätskriterium nicht erfüllt, ein Auswählen einer zweiten Aktorfunktion des ersten Aktors oder eines anderen Aktors des Kraftfahrzeugs durchgeführt werden, und es folgt ein Erzeugen eines zweiten Aktorsignals, das ein Aktivieren der ausgewählten zweiten Aktorfunktion beschreibt sowie ein Übertragen des zweiten Aktorsignals an den entsprechenden Aktor.

Die Steuereinrichtung kann dann ein Ermitteln eines dritten Indexwerts aus zu einem dritten Zeitpunkt erfassten Vitaldaten durchführen, und anhand des dritten Indexwerts und mindestens einem der anderen Indexwerte ermitteln, ob der dritte Indexwert des Effektivitätskriterium erfüllt und/oder ob die zweite Aktorfunktion einen höheren Grad einer Verbesserung bewirkt als die erste Aktorfunktion. Falls die zweite Aktorfunktion einen höheren Grad einer Verbesserung bewirkt, kann ein Aktivieren der zweiten Aktorfunktion erfolgen, sobald ein weiterer Indexwert ermittelt wird, der den physiologischen Zustand beschreibt.

Das erfindungsgemäße Verfahren kann benutzerspezifisch zugeschnitten werden, wenn, gemäß einer weiteren Ausführungsform des erfindungsgemäßen Verfahrens, die Steuereinrichtung ein Feststellen einer Identität des Benutzers durchführt, ein Bereitstellen einer Zuordnungsvorschrift durch Zuordnen einer Mehrzahl von Aktorfunktionen zu jeweils einem physiologischen Zustand, und ein Personalisieren der Zuordnungsvorschrift anhand der festgestellten Identität. Hiermit kann zum Beispiel ein personenspezifisches Wellnessprogramm im Kraftfahrzeug hinterlegt werden.

Gemäß einer Weiterbildung kann dabei die Identität des Benutzers anhand eines auf einem kraftfahrzeugexternen Datenserver abgelegten Benutzerprofils ermittelt werden. Die personenspezifischen Maßnahmen können also vorteilhafterweise zum Beispiel automatisch bereitgestellt werden, wenn sich ein aktueller Benutzer beispielsweise vor einer Fahrt in das System des Kraftfahrzeugs einloggt.

Wie bereits oben erwähnt, kann die Sensoreinrichtung vorzugsweise als Sensoreinrichtung eines tragbaren Accessoires ausgestaltet sein kann, das zum Tragen an einem Körper des Benutzers ausgestaltet ist. Eine solche Ausgestaltung kann beispielsweise ein Fitnessarmband sein, oder ein Kleidungsstück mit einer entsprechenden Sensoreinrichtung, ein Armband oder eine Uhr. Derartige Ausgestaltungen sind tagtägliche Accessoires und der Benutzer ist unter Verwendung eines solchen "Wearables" nicht dazu gezwungen, bei einer Autofahrt ein spezielles Gerät anzulegen. Außerdem sind solche Accessoires kompatibel mit dem Kraftfahrzeug, der Benutzer kann also den die Sensoreinrichtung aufweisenden Gegenstand täglich austauschen. Außerdem wird das Erfassen der Vitaldaten aus dem Kraftfahrzeug ausgegliedert, womit das Kraftfahrzeug günstiger in der Herstellung ist und nicht mit einer Sensoreinrichtung nachgerüstet werden muss.

Die jeweilige Aktorfunktion kann vorzugsweise aus einer der folgenden Aktoraktionen ausgewählt werden: Aktivieren einer Massagefunktion durch einen Kraftfahrzeugsitz und/oder Abspielen einer Audiodatei, vorzugsweise einer in einem Infotainmentsystem des Kraftfahrzeugs gespeicherten Audiodatei, und/oder Abspielen eines vorbestimmten Musikgenres und/oder Einstellen einer Beleuchtung durch eine Leuchteinrichtung des Kraftfahrzeugs und/oder Anzeigen einer Pausenempfehlung durch einen Bildschirm des Kraftfahrzeugs. Diese Maßnahmen stellen besonders effiziente Maßnahmen dar und können durch Einrichtungen des Kraftfahrzeugs ausgeführt werden.

Die oben gestellte Aufgabe wird ebenfalls gelöst durch eine Steuereinrichtung, die vorzugsweise einen Mikrokontroller und/oder einen Mikrochip aufweisen kann, wobei die Steuereinrichtung dazu eingerichtet ist, die eine Steuereinrichtung betreffenden Verfahrensschritte nach einem Verfahren der oben geschilderten Ausführungsformen durchzuführen. Es ergeben sich die oben genannten Vorteile.

Die oben genannten Vorteile werden ebenfalls erreicht durch ein erfindungsgemäßes Kraftfahrzeug, das durch eine erfindungsgemäße Steuereinrichtung gekennzeichnet ist. Das Kraftfahrzeug kann vorzugsweise als Kraftwagen, beispielsweise als Personenkraftwagen, ausgestaltet sein.

Weiterhin wird die oben gestellte Aufgabe gelöst durch ein Speichermedium mit einem Programmcode, der dazu eingerichtet ist, bei Ausführung durch eine Steuereinrichtung eines mobilen Endgeräts ein Verfahren nach einem der Ansprüche 1 bis 8 durchzuführen. Der Programmcode kann dabei zum Beispiel ein sogenanntes "Machine Learning Modell" bereitstellen. Ein solches Modell kann dann bei Ausführen des erfindungsgemäßen Verfahrens individuelle Vorlieben des Benutzers erlernen und so in Situationen, in denen sich der Benutzer erneut in dem physiologischen Zustand befindet, diejenigen Maßnahmen zum Verbessern des physiologischen Zustands aktivieren, die sich zuvor als besonders effizient erwiesen haben.

Die oben genannten Vorteile werden ebenfalls erreicht durch ein erfindungsgemäßes mobiles, portables Endgerät, mit einem erfindungsgemäßen Speichermedium und/oder einer erfindungsgemäßen Steuereinrichtung.

Die Erfindung wird anhand der beigefügten Zeichnung noch einmal durch konkrete Ausführungsbeispiele näher erläutert. Bei dem im Folgenden erläuterten Ausführungsbeispielen handelt es sich um bevorzugte Ausführungsformen der Erfindung. Bei den Ausführungsbeispielen stellen aber die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar. Funktionsgleiche Elemente weisen in der Figur dieselben Bezugszeichen auf. Es zeigt:
- Fig. 1: eine schematische Skizze zu einem ersten Ausführungsbeispiel des erfindungsgemäßen Verfahrens und zu einem Ausführungsbeispiel eines erfindungsgemäßen Kraftfahrzeugs, und
- Fig. 2: eine schematische Skizze zu einem weiteren Ausführungsbeispiel des erfindungsgemäßen Verfahrens.

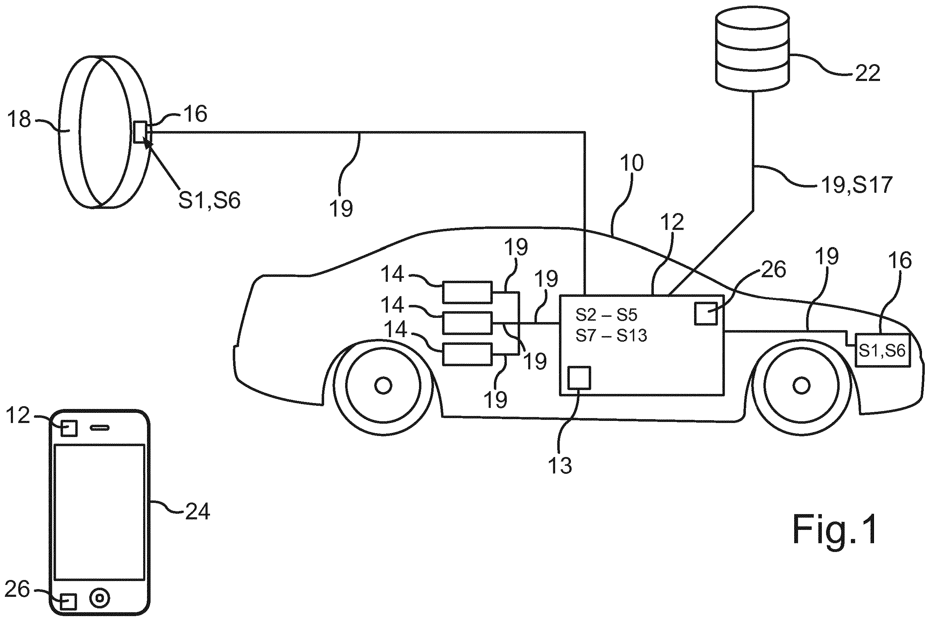

Die Fig. 1 veranschaulicht schematisch das Prinzip des erfindungsgemäßen Verfahrens. Hierzu zeigt die Fig. 1 ein Kraftfahrzeug 10, das vorzugsweise als Kraftwagen ausgestaltet sein kann, beispielsweise als Personenkraftwagen.

Das Kraftfahrzeug 10 weist eine Steuereinrichtung 12 auf, die optional einen Mikrochip 13 und/oder einen Mikrokontrollerchip 13 aufweisen kann. Die Steuereinrichtung 12 kann beispielsweise als Steuerplatine eines Steuergerätes oder als Steuergerät ausgestaltet sein.

Das Kraftfahrzeug 10 hat außerdem einen oder mehrere Aktoren 14, wobei ein Aktor 14 ein Antriebselement zum Umsetzen von elektrischen Signalen ist und beispielsweise als Kraftfahrzeugsitz mit einer Massagefunktion, ein Infotainmentsystem zum Abspielen einer Audiodatei und/oder zum Abspielen eines vorbestimmten Musikgenres, oder eine Leuchteinrichtung des Kraftfahrzeugs 10 sein kann. Unter einer Leuchteinrichtung wird dabei ein Gerät zum Regulieren und Steuern einer Beleuchtung im Kraftfahrzeug 10 verstanden. Die Leuchteinrichtung kann dazu Lampen oder Leuchten aufweisen. Die Aktoren 14 sind dabei über Signal- und/oder Datenkommunikationsverbindungen 19 drahtlos oder drahtgebunden mit der Steuereinrichtung 12 verbunden. Eine solche Signal- und/oder Datenkommunikationsverbindung 19 kann beispielsweise als WLAN-Verbindung oder als Teil eines Datenbus-Systems des Kraftfahrzeugs 10 ausgestaltet sein.

Das Kraftfahrzeug 10 kann optional eine Sensoreinrichtung 16 aufweisen, die dazu eingerichtet ist, Vitaldaten des Benutzers zu erfassen (Verfahrensschritt S1, S6). Die Vitaldaten beschreiben Werte des physiologischen Parameters des Benutzers, beispielsweise eine Herzrate, einen Pulsschlag und/oder eine Atemrate und/oder eine elektrische Leitfähigkeit zwischen zwei Körperpunkten. Hierzu kann die Sensoreinrichtung 16 beispielsweise einen oder mehrere Sensoren aufweisen, die zum Beispiel in ein Lenkrad des Kraftfahrzeugs 10 integriert sein können, sodass sie beim Benutzen des Lenkrads von den Händen des Benutzers berührt werden und somit zum Beispiel die elektrische Leitfähigkeit zwischen den beiden Händen messen können.

Alternativ oder zusätzlich kann die Sensoreinrichtung 16 als Sensoreinrichtung 16 des tragbaren Accessoires ausgestaltet sein, also beispielsweise als Sensoreinrichtung 16 eines Fitnessgurtes, eines Armbandes, einer Armbanduhr, oder eines tragbaren Kleidungsstückes. Werden die Vitaldaten von einem tragbaren Accessoires erfasst (S1, S6), können diese beispielsweise über eine WLAN-Verbindung an die Steuereinrichtung 12 übertragen werden. Hierzu kann das tragbare Accessoires 18 beispielsweise einen Sender aufweisen (in der Fig. 1 nicht gezeigt), und die Steuereinrichtung 12 einen entsprechenden Empfänger.

Gemäß Verfahrensschritt S2 ermittelt die Steuereinrichtung 12 einen ersten Indexwert (S2) von Vitaldaten, die zu einem ersten Zeitpunkt erfasst wurden. Algorithmen zum Ermitteln eines solchen Indexwertes aus Vitaldaten sind dem Fachmann aus dem Stand der Technik bekannt. Der Indexwert beschreibt einen physiologischen Zustand des Benutzers, beispielsweise eine Stresssituation. Um diese Stresssituation nun zu lindern, wählt die Steuereinrichtung 12 aus einer Mehrzahl von Aktoren 14 einen ersten Aktor 14 aus, beispielsweise, gemäß einer Grundeinstellung des Herstellers, einen Kraftfahrzeugsitz mit einer Massagefunktion (S3). Zusätzlich erzeugt die Steuereinrichtung 12 ein erstes Aktorsignal (S4), das ein Aktivieren der beispielhaften Massagefunktion beschreibt, und dieses erste Aktorsignal wird an den beispielhaften Kraftfahrzeugsitz übertragen (S5).

Die Massagefunktion dient generell dem Erhöhen des Wohlbefindens des Benutzers, wobei Rücken und/oder Schultern gelöst werden sollen. Unterschiedliche Benutzer reagieren jedoch unterschiedlich auf verschiedene Formen der Einflussnahme, so dass es sein kann, dass der beispielhafte Benutzer des Kraftfahrzeugs 10 zum Beispiel nicht an solche Massagebewegungen gewöhnt sein kann und diesen ihn zum Beispiel nicht so sehr entspannen kann wie andere Benutzer. Im Verfahrensschritt S6 erfasst die Sensoreinrichtung 16 deswegen erneut physiologische Vitaldaten, diesmal zu einem zweiten Zeitpunkt, der nach Aktivieren der ersten Aktorfunktion erfolgt.

Um zu erkennen, ob die beispielhafte Massagefunktion den Zweck erfüllt, ermittelt im Verfahrensschritt S7 die Steuereinrichtung 12 einen zweiten Indexwert die der zu dem zweiten Zeitpunkt erfassten Vitaldaten. Die beiden Indexwerte können nun miteinander verglichen werden (S8) und anhand dieses Vergleiches kann die Steuereinrichtung 12 beispielsweise ableiten, dass sich der Stresszustand deutlich verbessert hat. Zwecks eines Vergleiches der beiden Indexwerte (S8) kann die Steuereinrichtung 12 beispielsweise einen Zahlenwert des einen Indexwertes von einem Zahlenwert des anderen Indexwertes abziehen oder anhand einer digital gespeicherten Liste, die einen Zahlenwert eines Indexwerts einem Grad des Stresszustands zuordnen kann, den Grad des physiologischen Zustands ablesen. Denkbar sind jedoch auch komplexere Ermittlungsschritte, die, basierend auf Erfahrungswerten und Erfahrungen, in einem allgemeinen Algorithmus formuliert werden können.

Anhand eines Ergebnisses des Vergleichs wird nun ermittelt (S9), ob der zweite Indexwert ein Effektivitätskriterium erfüllt, wobei das Effektivitätskriterium beispielsweise in Form eines Zahlenwertes in der Steuereinrichtung 12 abgelegt sein kann. Hierzu kann sich der Indexwert beispielsweise, liegt er außerhalb einer vordefinierten Toleranz, verbessert haben. Hieraus kann gefolgert werden, ob die erste Aktorfunktion einen vorbestimmten Grad einer Verbesserung des physiologischen Zustands bewirkt hat oder nicht. Ist dies nicht der Fall, weil beispielsweise der Benutzer auf Massage eher mit Unbehagen und zusätzlichen Verspannungen reagiert oder sein Körper auf Massage nicht schnell reagiert, so kann die Steuereinrichtung 12 eine andere Aktorfunktion auswählen (S3) und aktivieren (S10), beispielsweise ein bestimmtes Musikgenre oder Musikstück durch ein Infotainmentsystem als Aktor 14 abspielen.

Die Steuereinrichtung 12 kann hierzu beispielsweise ein Lied aus einer Musiksendung auswählen, das der Benutzer beispielsweise als Lieblingslied oder "Power Lied" gekennzeichnet haben kann. Zum "Lernen", welche Aktorfunktion für den aktuellen Benutzer die wirksamste und/oder angenehmste ist, können beispielsweise solange verschiedene Aktorfunktionen durchgeführt werden, bis die Steuereinrichtung 12 eine Aktorfunktion ermitteln kann, die besonders wirksam sein kann. Basierend auf diesen Erkenntnissen kann die Steuereinrichtung 12 zum Beispiel eine Prioritätenliste aufstellen oder einfach ermitteln, welche Aktorfunktion die Wirksamste ist. Von jeder Aktorfunktion kann dabei ein Indexwert ermittelt werden (S7) und das Erfüllen oder nicht Erfüllen des Effektivitätskriterium kann zu diesem weiteren Indexwert ermittelt werden (S9).

Bei einem anderen Benutzer kann eine Massagefunktion beispielsweise sehr hilfreich sein, so dass der zweite Indexwert das Effektivitätskriterium zum Beispiel erfüllen kann. In einem solchen Fall ist vorgesehen, dass die Steuereinrichtung 12 eine Information zum Beispiel ablegen und speichern kann, die angeben kann, dass bei diesem anderen Benutzer das Effektivitätskriterium mit Hilfe der Massagefunktion erfüllt wird. Benutzt dieser andere Benutzer das Kraftfahrzeug dann wieder und wird bei diesem anderen Benutzer dann wieder ein Stresszustand festgestellt, so kann von vornherein die Massagefunktion aktiviert werden (S4).

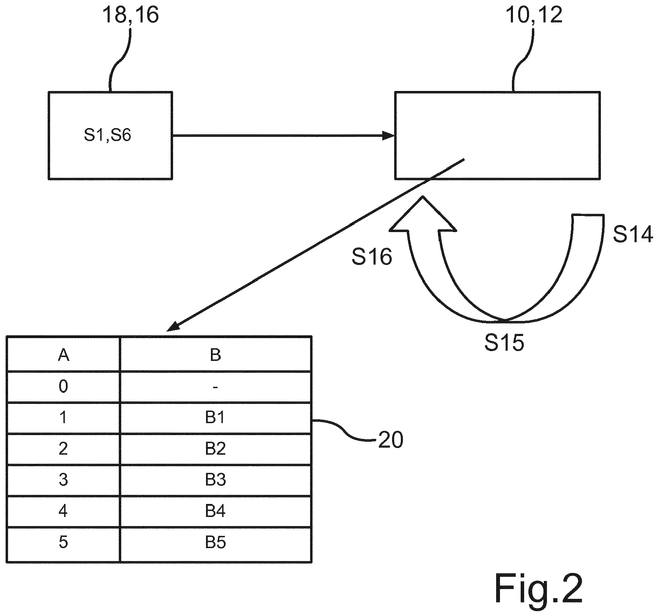

Um ein Kraftfahrzeug 10 individuell für mehrere Benutzer auszurichten, kann das Kraftfahrzeug 10 über die Steuereinrichtung 12 zum Beispiel eine Identität des Benutzers feststellen (S11) und dieser Identität eine Zuordnungsvorschrift 20 bereitstellen. Eine solche Zuordnungsvorschrift 20, die beispielsweise in Form von einer Tabelle in der Fig. 2 gezeigt ist, können mehrere Indexwerte oder physiologische Zustände A jeweils einem Aktor 14 und/oder einer Aktorfunktion B zugeordnet sein. Beispielhaft zeigt die Tabelle der Fig. 2 hierzu sechs verschiedene Stresslevel null bis fünf, die jeweils einer Aktorfunktion B oder einer Kombination mehrerer Aktorfunktionen B zugeordnet sein können.

Einem Stresslevel von null kann beispielsweise gar keine Aktorfunktion zugeordnet sein. Einem Stresslevel der Abstufung eins kann beispielsweise eine Aktorfunktion B1 zugeordnet sein, die zum Beispiel das Abspielen von Jazzmusik durch ein Infotainmentsystem beschreiben kann. Eine Aktorfunktion-Kombination B2 kann beispielsweise das Abspielen von Jazzmusik und das Einstellen eines Lichteffektes vorsehen, während eine Aktorfunktion-Kombination B3 eine Kombination eines Lichteffektes und des Aktivieren eines Massagesitzes beschreiben kann. Ermittelt die Steuereinrichtung 12 einen vierten Stresslevel, der beispielsweise ein sehr hoher Stresslevel sein kann, kann eine Kombination von Aktoren 14 vorgesehen sein, dass das Abspielen von Jazzmusik, einem Lichteffekt und das Einschalten der Massagefunktion vorsehen kann. Ist der Benutzer in einem sehr hohen Stresszustand fünf, so kann als Aktorfunktion B5 vorgesehen sein, dass beispielsweise über das Infotainmentsystem eine Pausenempfehlung ausgegeben werden kann.

Mit anderen Worten beschreibt das Beispiel der Zuordnungsvorschrift 20 der Fig. 2, dass auch durch ein Aktorsignal mehrere Aktorfunktionen B gleichzeitig durchgeführt werden können.

Die Fig. 2 zeigt damit noch einmal exemplarisch den Ablauf eines Regelkreises oder "Machine Learning Modells", beispielsweise bei einem gestressten Benutzer, wobei ein tragbares Accessoires 18 Vitaldaten erfasst (S1, S6) und das Kraftfahrzeug 10 mit Hilfe der Steuereinrichtung 12 zum Beispiel zunächst folgend einer Grundeinstellung eines Regelkreises von einem Stresslevel null ausgehen kann und keine Aktorfunktion B auslösen kann. Der Verfahrensschritt S14 kann das einleiten einer Maßnahme zum Verbessern des physiologischen Zustandes A umfassen. Im Verfahrensschritt S15 wird die Änderung des physiologischen Zustandes gemessen oder ermittelt. Die Regeln für den Regelsatz werden im Verfahrensschritt S16 angepasst.

Das Personalisieren der Zuordnungsvorschrift 20 (S13), die auch als Regelsatz bezeichnet werden kann, kann beispielhaft anhand eines Benutzerprofils festgestellt werden (S11), das beispielsweise in einem kraftfahrzeugexternen Datenserver 22 gespeichert sein kann. Hierzu kann die Steuereinrichtung 12 zum Beispiel ein Kommunikationsmodul zum Aufbauen einer Internetverbindung aufweisen. Über die beispielhafte Internetverbindung kann dann die Kommunikation S17 mit dem kraftfahrzeugexternen Datenserver 22 erfolgen. Hierzu kann beispielsweise vorgesehen sein, dass sich der Benutzer beispielsweise über einen berührungssensitiven Bildschirm eines Infotainmentsystems in sein Benutzerprofil einloggen kann.

Die Fig. 1 zeigt ebenfalls ein mobiles, portables Endgerät 24, das beispielsweise als Smartphone oder Tablet-PC oder Laptop ausgestaltet sein kann. Das mobile, portable Endgerät 24 kann ein Speichermedium 26 aufweisen, beispielsweise einen Speicherchip oder eine Festplatte, auf denen sich ein Programmcode befindet, der dazu eingerichtet ist, bei Ausführung durch eine Steuereinrichtung 12 des mobilen Endgeräts 24 die eine Steuereinrichtung 12 betreffenden Verfahrensschritte einer der Ausführungsformen des erfindungsgemäßen Beispiels durchzuführen. Der Übersicht wegen sind dabei die Kommunikationsverbindungen 19 zu der Sensoreinrichtung 16 und den Aktoren 14 nicht gezeigt. Ein solches Speichermedium 26 kann alternativ Bestandteil der Steuereinrichtung 12 des Kraftfahrzeugs 10 sein.

Das Ermitteln der Indexwerte (S2, S7) und/oder andere die Steuereinrichtung 12 betreffende Verfahrensschritte können alternativ beispielsweise von dem mobilen Endgerät 24 durchgeführt werden, die hierzu beispielsweise ein entsprechendes Anwenderprogramm ("App") aufweisen kann.

Die Zuordnungsvorschrift 20 kann optional an ein weiteres Kraftfahrzeug 10 weitergegeben werden, wenn sich beispielsweise der Benutzer ein neues Auto kauft. Hierzu kann zum Beispiel regelmäßig von dem alten Kraftfahrzeug 10 ein Backup gemacht werden können, wobei die Zuordnungsvorschrift 20 beispielsweise im Kundenprofil und damit auf dem kraftfahrzeugexternen Datenserver 22, abgelegt werden kann. Bei Kauf eines neuen Kraftfahrzeugs 10 kann die dort abgelegte Zuordnungsvorschrift 20 beispielsweise in die Steuereinrichtung 12 des neuen Kraftfahrzeugs 10 eingespielt werden.

Die oben angeführten Ausführungsbeispiele veranschaulichen das erfindungsgemäße Prinzip, ein personalisiertes Stressfeedback zu lernen. Gemäß einem weiteren Ausführungsbeispiel kann das erfindungsgemäße Verfahren zum Beispiel als statistisches Verfahren in dem Kraftfahrzeug 10 integriert werden, welches messen kann, wie effektiv die einzelnen Maßnahmen, also die einzelnen Aktorfunktionen B einen physiologischen Zustand A verbessern, also beispielsweise einen Stress reduzieren. Dadurch können kundenspezifisch und individuell Aktorfunktionen zur beispielhaften Stressreduzierung gewählt werden, um das beste Ergebnis für den Benutzer zu erzielen.

Beispielsweise kann angenommen werden, dass Jazzmusik einen Benutzer entspannt und beispielsweise seinen Stresslevel mindert. Allerdings kann durch das erfindungsgemäße Verfahren zum Beispiel gelernt werden, dass diese Maßnahme bei dem Benutzer dieses Kraftfahrzeugs 10 nicht funktioniert. Im Anschluss kann eine andere Methode versucht werden, also eine andere Aktorfunktion aktiviert werden, beispielsweise Rockmusik oder spezielle Songs aus seiner Playliste. Das System kann so merken, dass zum Beispiel durch diese Änderung die Stressreduzierung effektiver wird und kann sich das merken.

Mit anderen Worten erfolgt eine Individualisierung der Stressminderungsmethoden für die Benutzer basierend auf statistischen Lernverfahren.

Vorteilhafterweise ergibt sich eine bessere Wirksamkeit der beispielhaften Stressreduzierung und somit eine bessere Kundenzufriedenheit.

Gemäß einem weiteren Ausführungsbeispiel kann zum Beispiel ein tragbares Accessoires 18 einen aktuellen Stresswert eines Fahrers liefern (S1, S6). Wird Stress erkannt (S2), kann das Kraftfahrzeug 10 die Default-Maßnahme zur Stressreduzierung durchführen, also durch Funktionen gemäß einer Grundeinstellung durchführen. Anschließend kann eine Effektivität der Maßnahmen anhand der Änderung des Stresslevels gemessen werden (S9). Die Regeln können anschließend angepasst und auf den Benutzer spezifisch optimiert werden.

## Patentansprüche

1. Verfahren zum Betreiben eines Kraftfahrzeugs (10), das Verfahren aufweisend die durch eine Steuereinrichtung (12) durchgeführten Schritte:
- Ermitteln eines ersten Indexwerts aus zu einem ersten Zeitpunkt erfassten Vitaldaten, wobei die Vitaldaten aus einer Sensoreinrichtung (16) empfangen werden und wobei die Vitaldaten einen physiologischen Parameter eines Benutzers des Kraftfahrzeugs (10) beschreiben (S2),
- in Abhängigkeit von dem ersten Indexwert Auswählen eines ersten Aktors (14) des Kraftfahrzeugs (10) aus einer Mehrzahl von Aktoren (14) (S3),
- Erzeugen eines ersten Aktorsignals, das ein Aktivieren von einer von dem ersten Aktor (14) durchzuführenden ersten Aktorfunktion beschreibt (S4), und Übertragen des ersten Aktorsignals an den ersten Aktor (14) (S5),
**gekennzeichnet durch**
- nach dem Aktivieren der ersten Aktorfunktion Erfassen von physiologischen Vitaldaten des Benutzers zu einem zweiten Zeitpunkt durch die Sensoreinrichtung (16, S6),
und die durch die Steuereinrichtung (12) durchgeführten Schritte:
- Ermitteln eines zweiten Indexwerts aus den zu dem zweiten Zeitpunkt erfassten Vitaldaten (S7),
- Vergleichen der beiden Indexwerte, die jeweils einen physiologischen Zustand des Benutzers beschreiben (S8),
- anhand eines Ergebnisses des Vergleichs Ermitteln, ob der zweite Indexwert ein Effektivitätskriterium erfüllt, das einen vorbestimmten Grad einer Verbesserung des physiologischen Zustands durch die aktivierte Aktorfunktion beschreibt (S9),
- falls der zweite Indexwert das Effektivitätskriterium erfüllt: Aktivieren der ersten Aktorfunktion (S10), sobald ein Indexwert ermittelt wird, der den physiologischen Zustand beschreibt.

2. Verfahren nach Anspruch 1, **gekennzeichnet durch** die von der Steuereinrichtung (12) durchgeführten Schritte:
- falls der zweite Indexwert das Effektivitätskriterium nicht erfüllt: Auswählen einer zweiten Aktorfunktion (S3) des ersten Aktors (14) oder eines anderen Aktors (14) des Kraftfahrzeugs (10),
- Erzeugen eines zweiten Aktorsignals (S4), das ein Aktivieren der ausgewählten zweiten Aktorfunktion beschreibt, und Übertragen des zweiten Aktorsignals an den entsprechenden Aktor (14, S5),
- Ermitteln eines dritten Indexwerts aus zu einem dritten Zeitpunkt erfassten Vitaldaten (S7),
- anhand des dritten Indexwerts und mindestens einem der anderen Indexwerte Ermitteln, ob der dritte Indexwert das Effektivitätskriterium erfüllt und/oder ob die zweite Aktorfunktion einen höheren Grad einer Verbesserung bewirkt als die erste Aktorfunktion (S9),
- falls die zweite Aktorfunktion einen höheren Grad einer Verbesserung bewirkt: Aktivieren der zweiten Aktorfunktion, sobald ein weiterer Indexwert ermittelt wird, der den physiologischen Zustand beschreibt (S10).

3. Verfahren nach einem der vorhergehenden Ansprüche, **gekennzeichnet durch** den durch die von der Steuereinrichtung (12) durchgeführten Schritte:
- Feststellen einer Identität des Benutzers (S11),
- Bereitstellen einer Zuordnungsvorschrift (20) durch Zuordnen einer Mehrzahl von Aktorfunktionen zu jeweils einem physiologischen Zustand (S12), und
- Personalisieren der Zuordnungsvorschrift (20) anhand der festgestellten Identität (S13).

4. Verfahren nach Anspruch 3, **dadurch gekennzeichnet, dass** die Identität des Benutzers anhand eines auf einem kraftfahrzeugexternen Datenserver (24) abgelegten Benutzerprofils festgestellt wird (S11).

5. Verfahren nach einem der vorhergehenden Ansprüche, **dadurch gekennzeichnet, dass**
die Sensoreinrichtung (16) als Sensoreinrichtung (16) eines tragbaren Accessoires (18) ausgestaltet ist, das zum Tragen an einem Körper des Benutzers ausgestaltet ist.

6. Verfahren nach einem der vorhergehenden Ansprüche, **dadurch gekennzeichnet, dass**
die jeweilige Aktorfunktion aus einer der folgenden Aktoraktionen ausgewählt wird (S3): Aktivieren einer Massagefunktion durch einen Kraftfahrzeugsitz und/oder Abspielen einer Audiodatei und/oder Abspielen eines vorbestimmten Musikgenres und/oder Einstellen einer Beleuchtung durch eine Leuchteinrichtung des Kraftfahrzeugs (10) und/oder Anzeigen einer Pausenempfehlung durch einen Bildschirm des Kraftfahrzeugs (10).

7. Steuereinrichtung (12), die vorzugsweise einen Mikrokontroller (13) und/oder einen Mikrochip (13) aufweisen kann, wobei die Steuereinrichtung (12) dazu eingerichtet ist, die eine Steuereinrichtung (12) betreffenden Verfahrensschritte nach einem Verfahren der vorhergehenden Ansprüche durchzuführen.

8. Kraftfahrzeug (10), **gekennzeichnet durch** eine Steuereinrichtung (12) nach Anspruch 7.

9. Speichermedium (26) mit einem Programmcode, der dazu eingerichtet ist, bei Ausführen durch eine Steuereinrichtung (12) eines mobilen Endgeräts (24) ein Verfahren nach einem der Ansprüche 1 bis 6 durchzuführen.

10. Mobiles, portables Endgerät (24), mit einem Speichermedium (26) nach Anspruch 9.

## Claims

1. Method for operating a motor vehicle (10), the method including the steps performed by a control device (12):
- determining a first index value from vital data acquired at a first time point, wherein the vital data are received from a sensor device (16) and wherein the vital data describe a physiological parameter of a user of the motor vehicle (10) (S2),
- as a function of the first index value, selecting a first actuator (14) of the motor vehicle (10) from a plurality of actuators (14) (S3),
- generating a first actuator signal which describes an activation of a first actuator function (S4) to be performed by the first actuator (14) and transmitting the first actuator signal to the first actuator (14) (S5),
**characterised by**
- after activating the first actuator function acquiring physiological vital data of the user at a second time point by the sensor device (16, S6),
and the steps performed by the control device (12):
- determining a second index value from the vital data acquired at the second time point (S7),
- comparing the two index values, which each describe a physiological state of the user (S8),
- based on a result of the comparison, determining whether the second index value meets an effectiveness criterion, which describes a predetermined degree of improvement of the physiological state by the activated actuator function (S9),
- if the second index value meets the effectiveness criterion: activating the first actuator function (S10) as soon as an index value is determined which describes the physiological state.

2. Method according to claim 1, **characterised by** the steps performed by the control device (12):
- if the second index value does not fulfil the effectiveness criterion: selecting a second actuator function (S3) of the first actuator (14) or another actuator (14) of the motor vehicle (10),
- generating a second actuator signal (S4) which describes an activation of the selected second actuator function and transmitting the second actuator signal to the corresponding actuator (14, S5),
- determining a third index value from vital data (S7) collected at a third time point,
- based on the third index value and at least one of the other index values, determining whether the third index value meets the effectiveness criterion and/or whether the second actuator function produces a higher degree of improvement than the first actuator function (S9),
- if the second actuator function produces a higher degree of improvement:
activating the second actuator function as soon as a further index value is determined which describes the physiological state (S10).

3. Method according to any of the preceding claims, **characterised by** the steps performed by the control device (12):
- establishing an identity of the user (S11),
- providing an assignment rule (20) by assigning a plurality of actuator functions to a respective physiological state (S12), and
- personalising the assignment rule (20) based on the determined identity (S13).

4. Method according to claim 3, **characterised in that**
the identity of the user is established (S11) with reference to a user profile stored on a data server (24) external to the motor vehicle.

5. Method according to any of the preceding claims, **characterised in that**
the sensor device (16) is configured as a sensor device (16) of a wearable accessory (18) which is configured to be worn on a user's body.

6. Method according to any of the preceding claims, **characterised in that**
the respective actuator function is selected from one of the following actuator actions (S3): activating a massage function with a motor vehicle seat and/or playing an audio file and/or playing a predetermined genre of music and/or adjusting a light with a lighting device of the motor vehicle (10) and/or displaying a recommendation to take a break through a screen of the motor vehicle (10).

7. Control device (12), which can preferably have a microcontroller (13) and/or a microchip (13), wherein the control device (12) is configured to perform the method steps relating to a control device (12) according to a method of the preceding claims.

8. Motor vehicle (10), **characterised by** a control device (12) according to claim 7.

9. Storage medium (26) with a program code, which, when executed by a control device (12) of a mobile terminal (24), is adapted to perform a method according to any of claims 1 to 6.

10. Mobile, portable terminal (24) with a storage medium (26) according to claim 9.

## Revendications

1. Procédé permettant de faire fonctionner un véhicule automobile (10), le procédé présentant les étapes réalisées par un appareil de commande (12) consistant à :
- déterminer une première valeur d'indice à partir de données vitales détectées à un premier instant, dans lequel les données vitales sont reçues en provenance d'un dispositif capteur (16) et dans lequel les données vitales décrivent un paramètre physiologique d'un utilisateur du véhicule automobile (10) (S2),
- en fonction de la première valeur d'indice, sélectionner un premier actionneur (14) du véhicule automobile (10) parmi une pluralité d'actionneurs (14) (S3),
- générer un premier signal d'actionneur, qui décrit une activation d'une première fonction d'actionneur (S4) devant être exécutée par le premier actionneur (14), et transmettre le premier signal d'actionneur au premier actionneur (14) (S5), **caractérisé par** l'étape consistant à
- après l'activation de la première fonction d'actionneur, détecter des données vitales physiologiques de l'utilisateur à un deuxième instant par l'intermédiaire du dispositif capteur (16, S6),
et les étapes exécutées par l'appareil de commande (12) consistant à :
- déterminer une deuxième valeur d'indice à partir des données vitales détectées au deuxième instant (S7),
- comparer les deux valeurs d'indice qui décrivent chacune un état physiologique de l'utilisateur (S8),
- grâce à un résultat de la comparaison, déterminer si la deuxième valeur d'indice satisfait à un critère d'efficacité, qui décrit un degré prédéterminé d'une amélioration de l'état physiologique par l'intermédiaire de la fonction d'actionneur activée (S9),
- si la deuxième valeur d'indice satisfait au critère d'efficacité : activer la première fonction d'actionneur (S10) dès qu'une valeur d'indice qui décrit l'état physiologique est déterminée.

2. Procédé selon la revendication 1, **caractérisé par** les étapes réalisées par l'appareil de commande (12) consistant à :
- si la deuxième valeur d'indice ne satisfait pas au critère d'efficacité : sélectionner une seconde fonction d'actionneur (S3) du premier actionneur (14) ou d'un autre actionneur (14) du véhicule automobile (10),
- générer un deuxième signal d'actionneur (S4), qui décrit une activation de la seconde fonction d'actionneur sélectionnée, et transmettre le second signal d'actionneur à l'actionneur correspondant (14, S5),
- déterminer une troisième valeur d'indice à partir de données vitales (S7) détectées à un troisième instant,
- grâce à la troisième valeur d'indice et à au moins l'une des autres valeurs d'indice, déterminer si la troisième valeur d'indice satisfait au critère d'efficacité et/ou si la seconde fonction d'actionneur entraîne un degré d'amélioration supérieur à la première fonction d'actionneur (S9),
- si la seconde fonction d'actionneur entraîne un degré d'amélioration supérieur : activer la seconde fonction d'actionneur dès qu'une valeur d'indice supplémentaire qui décrit l'état physiologique est déterminée (S10).

3. Procédé selon l'une quelconque des revendications précédentes, **caractérisé par** les étapes réalisées par l'appareil de commande (12) consistant à :
- constater une identité de l'utilisateur (S11),
- fournir une instruction d'attribution (20) en attribuant une pluralité de fonctions d'actionneur à un état physiologique respectif (S12), et
- personnaliser l'instruction d'attribution (20) grâce à l'identité établie (S13).

4. Procédé selon la revendication 3, **caractérisé en ce que**
l'identité de l'utilisateur est déterminée (S11) à l'aide d'un profil d'utilisateur stocké sur un serveur de données (24) externe au véhicule automobile.

5. Procédé selon l'une quelconque des revendications précédentes, **caractérisé en ce que**
le dispositif capteur (16) est conçu comme un dispositif capteur (16) d'un accessoire portable (18), qui est conçu pour être porté sur le corps de l'utilisateur.

6. Procédé selon l'une quelconque des revendications précédentes, **caractérisé en ce que**
la fonction d'actionneur respective est sélectionnée (S3) parmi une des actions d'actionneur suivantes : activer une fonction de massage via un siège de véhicule automobile et/ou lire un fichier audio et/ou lire un genre musical prédéterminé et/ou régler un éclairage via un dispositif d'éclairage du véhicule automobile (10) et/ou afficher une recommandation de pause à travers un écran du véhicule automobile (10).

7. Appareil de commande (12), qui peut de préférence présenter un microcontrôleur (13) et/ou une micropuce (13), dans lequel l'appareil de commande (12) est conçu pour exécuter les étapes de procédé relatives à un appareil de commande (12) selon un procédé de l'une quelconque des revendications précédentes.

8. Véhicule automobile (10), **caractérisé par** un appareil de commande (12) selon la revendication 7.

9. Support de stockage (26) avec un code de programme qui est configuré pour exécuter un procédé selon l'une quelconque des revendications 1 à 6 lorsqu'il est exécuté par un appareil de commande (12) d'un dispositif terminal mobile (24).

10. Terminal mobile portable (24) avec un support de stockage (26) selon la revendication 9.
